# EUROPEAN PATENT SPECIFICATION

(11) **EP 2 069 630 B1**
(45) Date of publication and mention of the grant of the patent: **20.11.2013**
(21) Application number: 06825793.0
(22) Date of filing: 12.10.2006
(51) Int. Cl.: F02K 1/09, F02K 3/06

(54) **Nacelle assembly and corresponding method**
Gondelanordnung und zugehöriges Verfahren
Agencement de nacelle et procédé associé

(43) Date of publication of application: 17.06.2009
(73) Proprietor: United Technologies Corporation, Hartford, Connecticut 06101 (US)
(72) Inventor: MIGLIARO, Edward, F., Jr., Marlborough, CT 06447 (US); EILER, Donald, C., Portland, CT 06480 (US)
(74) Representative: Leckey, David Herbert
(86) International application number: PCT/US2006/039794
(87) International publication number: WO 2008/045049

(56) References cited:
- GB-A- 1 503 425
- GB-A- 2 189 550
- US-A- 3 779 010
- US-A- 3 820 719
- US-A- 4 327 548
- US-A- 5 778 659
- US-A- 5 806 302
- US-A- 5 853 148
- US-A1- 2006 101 807

## Description

### BACKGROUND OF THE INVENTION

The present invention relates to a gas turbine engine, and more particularly to a turbofan engine having a fan variable area nozzle which moves axially to change a bypass flow path area thereof.

Conventional gas turbine engines generally include a fan section and a core engine with the fan section having a larger diameter than that of the core engine. The fan section and the core engine are disposed about a longitudinal axis and are enclosed within an engine nacelle assembly.

Combustion gases are discharged from the core engine through a core exhaust nozzle while an annular fan flow, disposed radially outward of the primary airflow path, is discharged through an annular fan exhaust nozzle defined between a fan nacelle and a core nacelle. A majority of thrust is produced by the pressurized fan air discharged through the fan exhaust nozzle, the remaining thrust being provided from the combustion gases discharged through the core exhaust nozzle.

The fan nozzles of conventional gas turbine engines have a fixed geometry. The fixed geometry fan nozzles are a compromise suitable for take-off and landing conditions as well as for cruise conditions. Some gas turbine engines have implemented fan variable area nozzles. The fan variable area nozzle provide a smaller fan exit nozzle diameter during cruise conditions and a larger fan exit nozzle diameter during take-off and landing conditions. Existing fan variable area nozzles typically utilize relatively complex mechanism that increase overall engine weight to the extent that the increased fuel efficiency therefrom may be negated.

Accordingly, it is desirable to provide an effective, lightweight fan variable area nozzle for a gas turbine engine.

Examples of gas turbine engines having a variable fan nozzle exit area are diosclosed in US-A-5778659, US-A-5853148, US-A-5806302, US-A-3820719, GB-A-2189550 and US-A-3779010. A gas turbine engine having retractable nise reduction tabs is disclosed in US 2006 0101807 A1

### SUMMARY OF THE INVENTION

A turbofan engine according to the present invention is set forth in claim 1. A method of varying a fan nozzle exit area according to the present invention is set forth in claim 9.

In operation, the FVAN communicates with the controller to effectively vary the area defined by the fan nozzle exit area. By adjusting the entire periphery of the second fan nacelle section in which all sectors are moved simultaneously, engine thrust and fuel economy are maximized during each flight regime by varying the fan nozzle exit area. By separately adjusting the circumferential sectors of the second fan nacelle section to provide an asymmetrical fan nozzle exit area, engine bypass flow is selectively vectored to provide, for example only, trim balance, thrust controlled maneuvering, enhanced ground operations and short field performance.

The present invention therefore provides an effective, lightweight fan variable area nozzle for a gas turbine engine.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic partial fragmentary view of an exemplary gas turbine engine embodiment for use with the present invention;
Figure 1B is a rear view of the engine;
Figure 2A is a side view of the FVAN in a closed position;
Figure 2B is a longitudinal sectional view of the FVAN in a closed position;
Figure 3A is a side view of the FVAN in an open position;
Figure 3B is a longitudinal sectional view of the FVAN in an open position; and
Figure 4 is a side view of the FVAN in a thrust vectored position.

### DETAILED DESCRIPTION OF THE PREFERRED EMBODIMENT

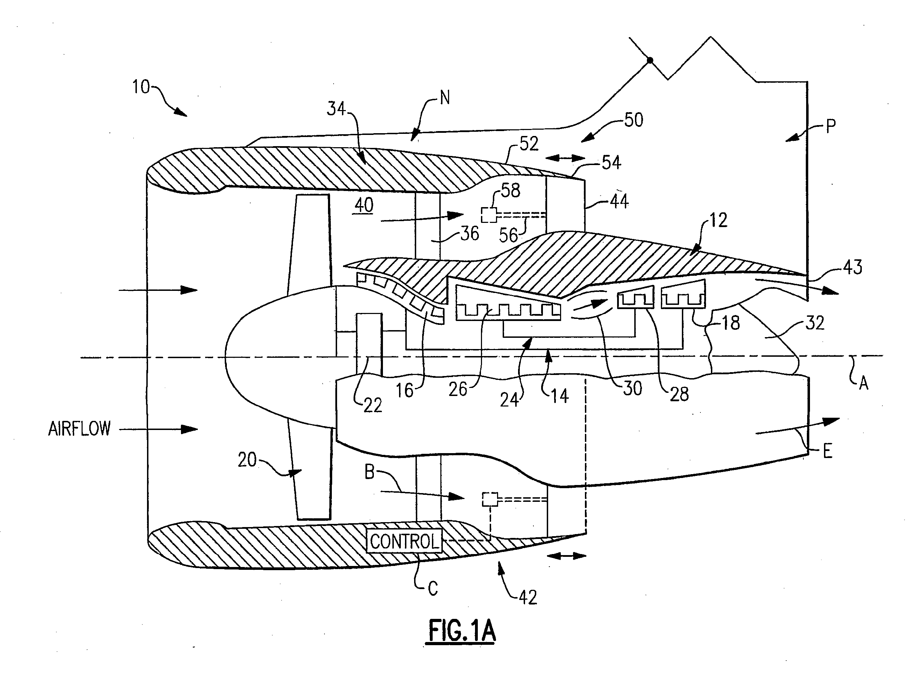

Figure 1A illustrates a general partial fragmentary schematic view of a gas turbofan engine 10 suspended from an engine pylon P within an engine nacelle assembly N as is typical of an aircraft designed for subsonic operation.

The turbofan engine 10 includes a core engine within a core nacelle 12 that houses a low spool 14 and high spool 24. The low spool 14 includes a low pressure compressor 16 and low pressure turbine 18. The low spool 14 drives a fan section 20 through a gear train 22. The high spool 24 includes a high pressure compressor 26 and high pressure turbine 28. A combustor 30 is arranged between the high pressure compressor 26 and high pressure turbine 28. The low and high spools 14, 24 rotate about an engine axis of rotation A.

The engine 10 is preferably a high-bypass geared turbofan aircraft engine. Preferably, the engine 10 bypass ratio is greater than ten (10:1), the turbofan diameter is significantly larger than that of the low pressure compressor 16, and the low pressure turbine 18 has a pressure ratio that is greater than 5:1. The gear train 22 is preferably an epicycle gear train such as a planetary gear system or other gear system with a gear reduction ratio of greater than 2.5:1. It should be understood, however, that the above parameters are only exemplary of a preferred geared turbofan engine and that the present invention is likewise applicable to other gas turbine engines including direct drive turbofans.

Airflow enters a fan nacelle 34, which at least partially surrounds the core nacelle 12. The fan section 20 communicates airflow into the core nacelle 12 to power the low pressure compressor 16 and the high pressure compressor 26. Core airflow compressed by the low pressure compressor 16 and the high pressure compressor 26 is mixed with the fuel in the combustor 30 and expanded over the high pressure turbine 28 and low pressure turbine 18. The turbines 28, 18 are coupled for rotation with, respective, spools 24, 14 to rotationally drive the compressors 26, 16 and through the gear train 22, the fan section 20 in response to the expansion. A core engine exhaust E exits the core nacelle 12 through a core nozzle 43 defined between the core nacelle 12 and a tail cone 32.

The core nacelle 12 is supported within the fan nacelle 34 by structure 36 often generically referred to as an upper and lower bifurcation. A bypass flow path 40 is defined between the core nacelle 12 and the fan nacelle 34. The engine 10 generates a high bypass flow arrangement with a bypass ratio in which approximately 80 percent of the airflow entering the fan nacelle 34 becomes bypass flow B. The bypass flow B communicates through the generally annular bypass flow path 40 and is discharged from the engine 10 through a fan variable area nozzle (FVAN) 42 which defines a nozzle exit area 44 between the fan nacelle 34 and the core nacelle 12 at a fan nacelle end segment 34S of the fan nacelle 34 downstream of the fan section 20.

Thrust is a function of density, velocity, and area. One or more of these parameters can be manipulated to vary the amount and direction of thrust provided by the bypass flow B. The FVAN 42 operates to effectively vary the area of the fan nozzle exit area 44 to selectively adjust the pressure ratio of the bypass flow B in response to a controller C.

A significant amount of thrust is provided by the bypass flow B due to the high bypass ratio. The fan section 20 of the engine 10 is preferably designed for a particular flight condition -- typically cruise at 0.8M and 35,000 feet. As the fan section 20 are efficiently designed at a particular fixed stagger angle for an efficient cruise condition, the FVAN 42 is operated to effectively vary the fan nozzle exit area 44 to adjust fan bypass air flow such that the angle of attack or incidence on the fan blades is maintained close to the design incidence for efficient engine operation at other flight conditions, such as landing and takeoff thus providing optimized engine operation over a range of flight conditions with respect to performance and other operational parameters such as noise levels. The FVAN 42 preferably provides an approximately 20% (twenty percent) change in area of the fan exit nozzle area 44.

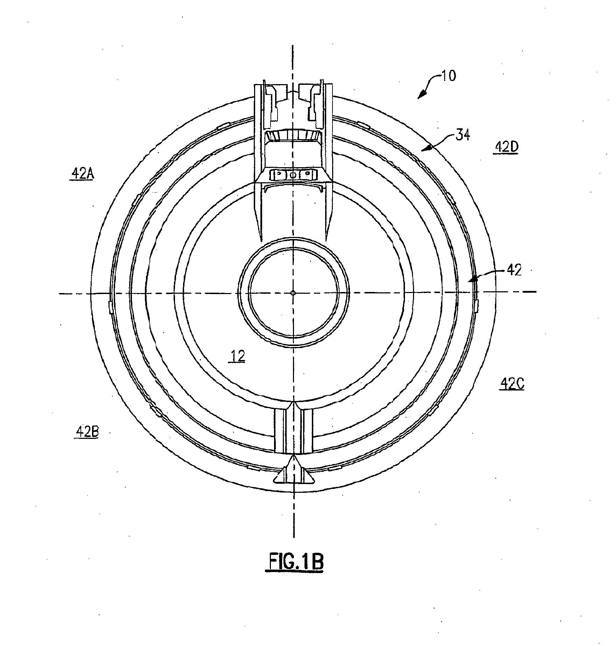

The FVAN 42 is preferably separated into at least four sectors 42A-42D (Figure 1B) which are each independently adjustable to asymmetrically vary the fan nozzle exit area 44 to generate vectored thrust. It should be understood that although four segments are illustrated, any number of segments may alternatively or additionally be provided.

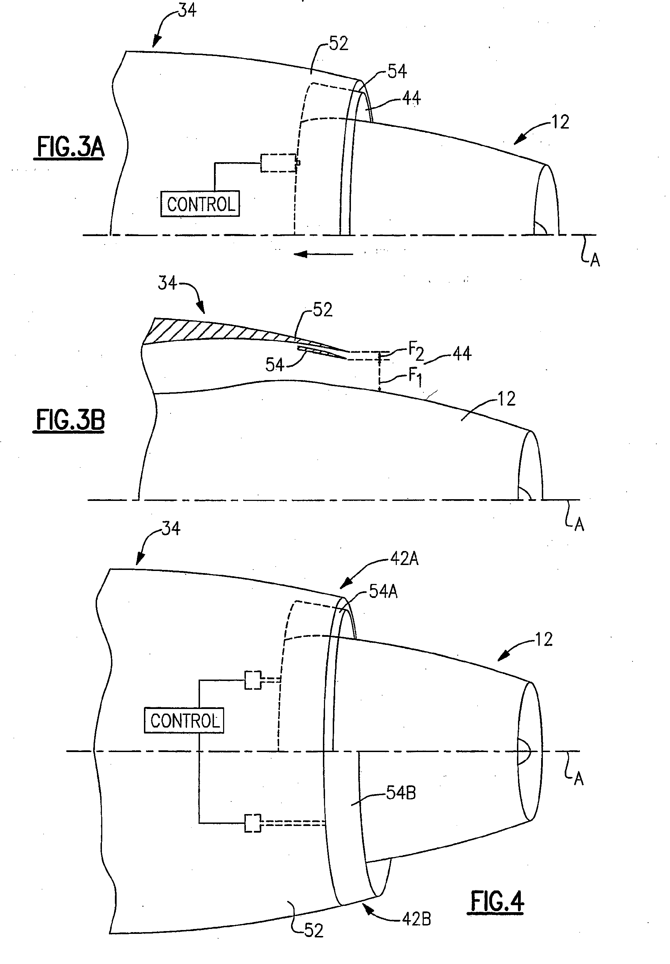

In operation, the FVAN 42 communicates with a controller C or the like to adjust the fan nozzle exit area 44 in a symmetrical and asymmetrical manner. Other control systems including an engine controller or aircraft flight control system may also be usable with the present invention. By adjusting the entire periphery of the FVAN 42 symmetrically in which all sectors are moved uniformly, thrust efficiency and fuel economy are maximized during each flight condition. By separately adjusting the circumferential sectors 42A-42D (Figure 4) of the FVAN 42 to provide an asymmetrical fan nozzle exit area 44, engine bypass flow is selectively vectored to provide, for example only, trim balance or thrust controlled maneuvering enhanced ground operations or short field performance.

The FVAN 42 generally includes an axial overlapped nozzle assembly 50 having a first fan nacelle section 52 and a second fan nacelle section 54 movably mounted relative the first fan nacelle section 52. The second fan nacelle section 54 axially slides along the engine axis A relative the fixed first fan nacelle section 52 to change the effective area of the fan nozzle exit area 44. The second fan nacelle section 54 preferably slides forward toward the fan section 20 upon a longitudinal track 56 (illustrated schematically) in response to an actuator 58.

The second fan nacelle section 54 preferably defines an annular fan section which moves as a unit. Alternatively, the second fan nacelle section 54 may subdivided into a multiple of fan nacelle sectors (Figures 1B and 4) to facilitate thrust vectoring operations through relative movement of the fan nacelle sectors.

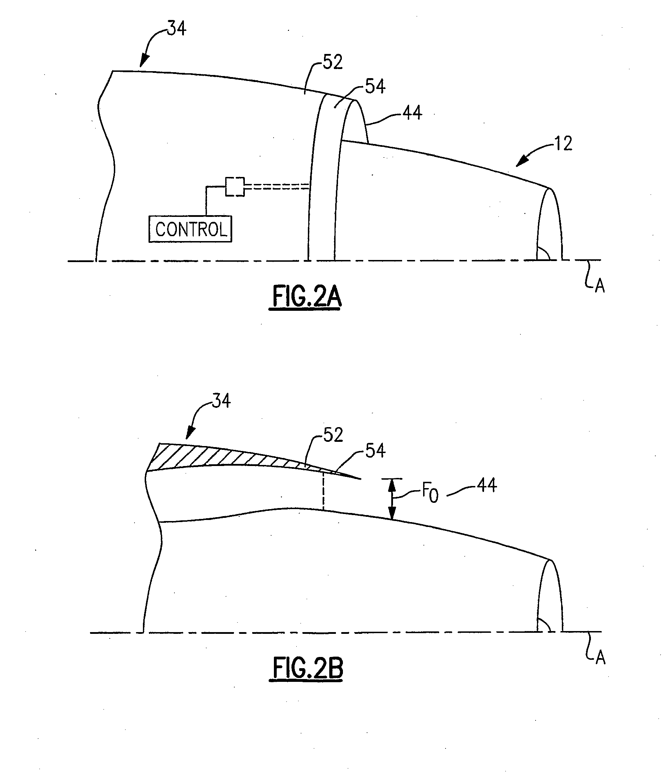

The axial overlapped nozzle assembly 50 changes the physical area and geometry of the bypass flow path 40 during particular flight conditions. The bypass flow B is effectively altered by sliding of the second fan nacelle section 54 relative the first fan nacelle section 52 between a closed position (Figures 2A and 2B) and an open position (Figures 3A and 3B). The axial overlapped nozzle assembly 50 is closed by positioning the second fan nacelle section 54 in-line with the first fan nacelle section 52 to define the fan nozzle exit area 44 as exit area F0 (Figure 2A). The axial overlapped nozzle assembly 50 is opened by moving the second fan nacelle section 54 forward into the first fan nacelle section 52 such that the second fan nacelle section 54 overlaps the first fan nacelle section 52 to provide an increased exit area F1 and F2 defined by the fan nozzle exit area 44 (Figure 3A). That is fan nozzle exit area 44 includes exit areas F1 and F2 (Figure 3B) which together are greater than exit area F0 (Figure 2B).

In operation, the FVAN 42 communicates with the controller C to move the second fan nacelle section 54 relative the first fan nacelle section 52 of the axial overlapped nozzle assembly 50 to effectively vary the area defined by the fan nozzle exit area 44. Other control systems including an engine controller or an aircraft flight control system may also be usable with the present invention. By adjusting the entire periphery of the second fan nacelle section 54 in which all sectors are moved simultaneously (Figure 3A), engine thrust and fuel economy are maximized during each flight regime by varying the fan nozzle exit area. By separately adjusting the circumferential sectors of the second fan nacelle section 54 to provide an asymmetrical fan nozzle exit area 44 (Figure 4), engine bypass flow is selectively vectored to provide, for example only, trim balance, thrust controlled maneuvering, enhanced ground operations and short field performance.

The foregoing description is exemplary rather than defined by the limitations within. Many modifications and variations of the present invention are possible in light of the above teachings, The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. A nacelle assembly for a gas turbine engine comprising:
a core nacelle (12) defined about an axis (A);
a fan nacelle (34) mounted at least partially around said core nacelle (12) to define a fan bypass flow path (40); and
a fan variable area nozzle (42) in communication with said fan bypass flow path (40), said fan variable area nozzle (42) having a first fan nacelle section (52) and a second fan nacelle section (54); **characterised in that**:
said second fan nacelle section (54) is axially movable along said axis (A) from a position aligned with said first fan nacelle section (52) to define a closed position of said fan nozzle exit area (44) forwardly into said first fan nacelle section (52) such that said second fan nacelle section (54) overlaps said first fan nacelle section (52) to provide an increased fan nozzle exit area (44).

2. The assembly as recited in claim 1, wherein said second fan nacelle section (54) is semi-annular.

3. The assembly as recited in claim 1, wherein said first fan nacelle section (52) and said second fan nacelle sections (54) are annular.

4. The assembly as recited in claim 1, wherein said second fan nacelle section (54) defines a trailing edge of said fan variable area nozzle (42).

5. The assembly as recited in claim 1, wherein said second fan nacelle section (54) is subdivided into a multiple of independently operable sectors (54A, 54B), each of said multiple of independently operable sectors (54A, 54B) axially movable relative said the first fan nacelle section (52) to define an asymmetric fan nozzle exit area (44).

6. The assembly as recited in claim 1, wherein said second fan nacelle section (54) is movable to said overlapping position in response to a non-cruise flight condition and to said aligned position in which the second fan nacelle section is in sequential alignment with the first fan nacelle section (52) in response to a cruise flight condition.

7. A gas turbine engine (10) comprising:
a core engine defined about an axis (A);
a gear system (22) driven by said core engine;
a turbofan (20) driven by said gear system about said axis (A); and
a nacelle assembly as recited in any preceding claim;
said core nacelle (12) defined at least partially about said core engine.

8. The engine as recited in claim 7, further comprising a controller (C) in communication with an actuator system to axially move said second fan nacelle section (54) along said axis relative to said first fan nacelle section to vary said fan nozzle exit area (44) in response to a flight condition.

9. A method of varying a fan nozzle exit area (44) of a gas turbine engine (10) comprising the step of:
(A) positioning a first fan nacelle section (52) and a second fan nacelle
section (54) about an axis (A); and **characterized in** a further step of
(B) axially moving the second fan nacelle section (54) relative the first fan nacelle section (52) along the axis from a position aligned with said first fan nacelle section (52) to define a closed position of said fan nozzle exit area (44) forwardly into said first fan nacelle section (52) such that said second fan nacelle section (54) overlaps said first fan nacelle section (52) to provide an increased fan nozzle exit area (44) in response to a flight condition.

10. A method as recited in claim 9, wherein said step (B) comprises:
(a) axially moving the second fan nacelle section (54) into the first fan nacelle section (52) to at least partially overlap the first fan nacelle section (52) about the axis (A) in response to a non-cruise flight condition.

11. A method as recited in claim 9, wherein said step (B) comprises:
(a) axially moving the second fan nacelle section (54) into sequential alignment with the first fan nacelle section (52) about the axis (A) in response to a cruise flight condition.

## Patentansprüche

1. Gondelanordnung für ein Gasturbinentriebwerk, aufweisend:
eine Kerngondel (12), die um eine Achse (A) gebildet ist;
eine Bläsergondel (34), die zumindest teilweise um die Kerngondel (12) angebracht ist, um einen Bläserbypass-Strömungsweg (40) zu bilden; und
eine Bläserdüse (42) mit variabler Fläche in Verbindung mit dem Bläserbypass-Strömungsweg (40), wobei die Bläserdüse (42) mit variabler Fläche einen ersten Bläsergondelbereich (52) und einen zweiten Bläsergondelbereich (54) aufweist;
**dadurch gekennzeichnet,**
**dass** der zweite Bläsergondelbereich (54) von einer mit dem ersten Bläsergondelbereich (52) ausgerichteten Position zum Bilden einer geschlossenen Position der Bläserdüsenaustrittsfläche (44) axial entlang der Achse (A) nach vorne in den ersten Bläsergondelbereich (52) hinein bewegbar ist, so dass der zweite Bläsergondelbereich (54) den ersten Bläsergondelbereich (52) überlappt, um eine vergrößerte Bläserdüsenaustrittsfläche (44) zu schaffen.

2. Anordnung nach Anspruch 1,
wobei der zweite Bläsergondelbereich (54) halbringförmig ist.

3. Anordnung nach Anspruch 1,
wobei der erste Bläsergondelbereich (52) und der zweite Bläsergondelbereich (54) ringförmig sind.

4. Anordnung nach Anspruch 1,
wobei der zweite Bläsergondelbereich (54) einen hinteren Rand der Bläserdüse (44) mit variabler Fläche bildet.

5. Anordnung nach Anspruch 1,
wobei der zweite Bläsergondelbereich (54) in mehrere unabhängig betreibbare Sektoren (54A, 54B) unterteilt ist, wobei jeder der mehreren unabhängig betreibbaren Sektoren (54A, 54B) relativ zu dem ersten Bläsergondelbereich (52) axial bewegbar ist, um eine asymmetrische Bläserdüsenaustrittsfläche (44) zu bilden.

6. Anordnung nach Anspruch 1,
wobei der zweite Bläsergondelbereich (54) in Reaktion auf eine Nicht-Reiseflugbedingung in die überlappende Position bewegbar ist und in Reaktion auf eine Reiseflugbedingung in die ausgerichtete Position bewegbar ist, in der der zweite Bläsergondelbereich nach und nach mit dem ersten Bläsergondelbereich (52) ausgerichtet wird.

7. Gasturbinentriebwerk (10), aufweisend:
ein Kerntriebwerk, das um eine Achse (A) gebildet ist;
ein Getriebesystem (22), das von dem Kerntriebwerk angetrieben wird;
einen Turbobläser (20), der von dem Getriebesystem um die Achse (A) angetrieben wird; und
eine Gondelanordnung nach einem der vorhergehenden Ansprüche;
wobei die Kerngondel (12) zumindest teilweise um das Kerntriebwerk gebildet ist.

8. Triebwerk nach Anspruch 7,
weiterhin aufweisend eine Steuerung (C) in Verbindung mit einem Aktuatorsystem, um den zweiten Bläsergondelbereich (54) relativ zu dem ersten Bläsergondelbereich axial die Achse entlang zu bewegen, um die Bläserdüsenaustrittsfläche (44) in Reaktion auf eine Flugbedingung zu variieren.

9. Verfahren zum Variieren einer Bläserdüsenaustrittsfläche (44) eines Gasturbinentriebwerks (10), wobei das Verfahren folgenden Schritt aufweist:
(A) Positionieren eines ersten Bläsergondelbereichs (52) und eines zweiten Bläsergondelbereichs (54) um eine Achse (A); und **gekennzeichnet durch** einen weiteren Schritt:
(B) axiales Bewegen des zweiten Bläsergondelbereichs (54) relativ zu dem ersten Bläsergondelbereich (52) entlang der Achse von einer mit dem ersten Bläsergondelbereich (52) ausgerichteten Position, um eine geschlossene Position der Bläserdüsenaustrittsfläche (44) zu bilden, nach vorne in den ersten Bläsergondelbereich (52) hinein, so dass der zweite Bläsergondelbereich (44) den ersten Bläsergondelbereich (52) überlappt, um in Reaktion auf eine Flugbedingung eine vergrößerte Bläserdüsenaustrittsfläche (44) zu schaffen.

10. Verfahren nach Anspruch 9,
wobei der Schritt (B) Folgendes beinhaltet:
(a) axiales Bewegen des zweiten Bläsergondelbereichs (54) in den ersten Bläsergondelbereich (52) hinein zumindest in teilweise Überlappung mit dem ersten Bläsergondelbereich (52) um die Achse (A) in Reaktion auf eine Nicht-Reiseflugbedingung.

11. Verfahren nach Anspruch 9,
wobei der Schritt (B) Folgendes beinhaltet:
(a) axiales Bewegen des zweiten Bläsergondelbereichs (54) nach und nach in Ausrichtung mit dem ersten Bläsergondelbereich (52) um die Achse (A) in Reaktion auf eine Reiseflugbedingung.

## Revendications

1. Ensemble de nacelle pour un moteur à turbine à gaz comprenant :
une nacelle de coeur (12) définie autour d'un axe (A) ;
une nacelle de soufflante (34) montée au moins partiellement autour de ladite nacelle de coeur (12) pour définir un trajet d'écoulement de dérivation de soufflante (40) ; et
une tuyère à aire variable de soufflante (42) en communication avec ledit trajet d'écoulement de dérivation de soufflante (40), ladite tuyère à aire variable de soufflante (42) ayant une première section de nacelle de soufflante (52) et une seconde section de nacelle de soufflante (54) ; **caractérisé en ce que** :
ladite seconde section de nacelle de soufflante (54) est axialement mobile le long dudit axe (A) d'une position alignée avec ladite section de nacelle de soufflante (52) pour définir une position fermée de ladite aire de sortie de tuyère de soufflante (44) vers l'avant dans ladite première section de nacelle de soufflante (52) de sorte que ladite seconde section de nacelle de soufflante (54) chevauche ladite première section de nacelle de soufflante (52) pour fournir une aire de sortie de tuyère de soufflante augmentée (44).

2. Ensemble selon la revendication 1, dans lequel ladite seconde section de nacelle de soufflante (54) est semi-annulaire.

3. Ensemble selon la revendication 1, dans lequel ladite première section de nacelle de soufflante (52) et ladite seconde section de nacelle de soufflante (54) sont annulaires.

4. Ensemble selon la revendication 1, dans lequel ladite seconde section de nacelle de soufflante (54) définit un bord de fuite de ladite tuyère à aire variable de soufflante (42).

5. Ensemble selon la revendication 1, dans lequel ladite seconde section de nacelle de soufflante (54) est subdivisée en un multiple de secteurs indépendamment opérationnels (54A, 54B), chacun dudit multiple de secteurs indépendamment opérationnels (54A, 54B) étant axialement mobile par rapport à ladite première section de nacelle de soufflante (52) pour définir une aire de sortie de tuyère de soufflante asymétrique (44).

6. Ensemble selon la revendication 1, dans lequel ladite seconde section de nacelle de soufflante (54) est mobile jusqu'à ladite position de chevauchement en réponse à une condition de vol non en croisière et jusqu'à ladite position alignée dans laquelle la seconde section de nacelle de soufflante est en alignement séquentiel avec la première section de nacelle de soufflante (52) en réponse à une condition de vol en croisière.

7. Moteur à turbine à gaz (10) comprenant :
un moteur de coeur défini autour d'un axe (A) ;
un système d'engrenage (22) entraîné par ledit moteur de coeur ;
un moteur à double flux (20) entraîné par ledit système d'engrenage autour dudit axe (A) ; et
un ensemble de nacelle selon l'une quelconque des revendications précédentes ;
ladite nacelle de coeur (12) étant définie au moins partiellement autour dudit moteur de coeur.

8. Moteur selon la revendication 7, comprenant en outre une unité de commande (C) en communication avec un système d'actionneur pour déplacer axialement ladite seconde section de nacelle de soufflante (54) le long dudit axe par rapport à ladite première section de nacelle de soufflante pour faire varier ladite aire de sortie de tuyère de soufflante (44) en réponse à une condition de vol.

9. Procédé consistant à faire varier une aire de sortie de tuyère de soufflante (44) d'un moteur à turbine à gaz (10) comprenant l'étape suivants :
(A) le positionnement d'une première section de nacelle de soufflante (52) et d'une seconde section de nacelle de soufflante (54) autour d'un axe (A) ; et **caractérisé par** l'étape supplémentaire suivante :
(B) le déplacement axial de la seconde section de nacelle de soufflante (54) par rapport à la première section de nacelle de soufflante (52) le long de l'axe d'une position alignée avec ladite première section de nacelle de soufflante (52) pour définir une position fermée de ladite aire de sortie de tuyère de soufflante (44) vers l'avant dans ladite première section de nacelle de soufflante (52) de sorte que ladite seconde section de nacelle de soufflante (54) chevauche ladite première section de nacelle de soufflante (52) pour fournir une aire de sortie de tuyère de soufflante augmentée (44) en réponse à une condition de vol.

10. Procédé selon la revendication 9, dans lequel ladite étape (B) comprend :
(a) le déplacement axial de la seconde section de nacelle de soufflante (54) dans la première section de nacelle de soufflante (52) pour chevaucher au moins partiellement la première section de nacelle de soufflante (52) autour de l'axe (A) en réponse à une condition de vol non en croisière.

11. Procédé selon la revendication 9, dans lequel ladite étape (B) comprend :
(a) le déplacement axial de la seconde section de nacelle de soufflante (54) en alignement séquentiel avec la première section de nacelle de soufflante (52) autour de l'axe (A) en réponse à une condition de vol en croisière.
